(19) Europäisches Patentamt / European Patent Office / Office européen des brevets

(11) **EP 2 844 500 B1**

(12) **FASCICULE DE BREVET EUROPEEN**

(45) Date de publication et mention de la délivrance du brevet:
**23.03.2016 Bulletin 2016/12**

(21) Numéro de dépôt: **13715973.7**

(22) Date de dépôt: **11.04.2013**

(51) Int Cl.:
*B60C 1/00* *(2006.01)*    *C08K 3/34* *(2006.01)*
*C08L 53/00* *(2006.01)*

(86) Numéro de dépôt international:
**PCT/EP2013/057527**

(87) Numéro de publication internationale:
**WO 2013/164168 (07.11.2013 Gazette 2013/45)**

(54) **OBJET PNEUMATIQUE POURVU D'UNE COUCHE ETANCHE AUX GAZ A BASE D'UN ELASTOMERE THERMOPLASTIQUE ET D'UNE CHARGE LAMELLAIRE**

DRUCKLUFTOBJEKT MIT EINER GASUNDURCHLÄSSIGEN SCHICHT AUF BASIS EINES THERMOPLASTISCHEN ELASTOMERS UND EINES LAMELLENFILTERS

PNEUMATIC OBJECT PROVIDED WITH A GASTIGHT LAYER BASED ON A THERMOPLASTIC ELASTOMER AND ON A LAMELLAR FILLER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.05.2012 FR 1254037**

(43) Date de publication de la demande:
**11.03.2015 Bulletin 2015/11**

(73) Titulaires:
• **Compagnie Générale des Etablissements Michelin**
**63000 Clermont-Ferrand (FR)**
• **MICHELIN Recherche et Technique S.A.**
**1763 Granges-Paccot (CH)**

(72) Inventeurs:
• **ABAD, Vincent**
**F-63040 Clermont-Ferrand Cedex 9 (FR)**
• **LEMAL, Vincent**
**F-63040 Clermont-Ferrand Cedex 9 (FR)**
• **LIBERT, Romain**
**F-63040 Clermont-Ferrand Cedex 9 (FR)**

(74) Mandataire: **Dequire, Philippe Jean-Marie Denis**
**M.F.P. Michelin**
**23, place des Carmes-Déchaux**
**DGD/PI - F35 - Ladoux**
**63040 Clermont-Ferrand Cedex 09 (FR)**

(56) Documents cités:
WO-A2-2012/004332    DE-A1-102007 022 147
FR-A1- 2 916 679    FR-A1- 2 939 142
FR-A1- 2 948 320

**Description**

**Domaine de l'invention**

La présente invention est relative aux objets « pneumatiques » ou articles gonflables, c'est-à-dire, par définition, aux objets qui prennent leur forme utilisable quand on les gonfle d'air ou d'un gaz de gonflage équivalent.

Elle se rapporte plus particulièrement aux couches étanches aux gaz assurant l'étanchéité de ces objets pneumatiques, en particulier celles des bandages pneumatiques.

**État de la technique**

Dans un bandage pneumatique conventionnel du type « tubeless » (c'est-à-dire sans chambre à air), la face radialement interne comporte une couche étanche à l'air (ou plus généralement à tout gaz de gonflage) qui permet le gonflement et le maintien sous pression du bandage pneumatique. Ses propriétés d'étanchéité lui permettent de garantir un taux de perte de pression relativement faible, permettant de maintenir le bandage gonflé en état de fonctionnement normal pendant une durée suffisante, normalement de plusieurs semaines ou plusieurs mois. Elle a également pour fonction de protéger l'armature de carcasse et plus généralement le reste du pneumatique d'un risque d'oxydation dû à la diffusion d'air provenant de l'espace intérieur au bandage.

Cette fonction de couche interne ou «gomme intérieure» ("*inner liner*") étanche est aujourd'hui remplie par des compositions à base de caoutchouc butyl (copolymère d'isobutylène et d'isoprène), reconnues depuis fort longtemps pour leurs excellentes propriétés d'étanchéité.

Toutefois, un inconvénient bien connu des compositions à base de caoutchouc butyl est qu'elles présentent des pertes hystérétiques importantes, qui plus est sur un spectre large de température, inconvénient qui pénalise la résistance au roulement des bandages pneumatiques.

Diminuer l'hystérèse de ces couches internes d'étanchéité et donc in fine la consommation de carburant des véhicules automobiles, est un objectif général auquel se heurte la technologie actuelle.

Le document WO 2009/007064 des Demanderesses divulgue un objet pneumatique pourvu d'une couche étanche aux gaz de gonflage, dans lequel la couche étanche comporte une composition élastomère comprenant au moins un élastomère thermoplastique styrénique (« TPS »), une charge lamellaire et optionnellement une huile polybutène. Comparativement à un caoutchouc butyl, l'élastomère TPS présente l'avantage majeur, en raison de sa nature thermoplastique, de pouvoir être travaillé tel quel à l'état fondu (liquide), et par conséquent d'offrir une possibilité de mise en oeuvre simplifiée tout en assurant une étanchéité au moins égale, sinon supérieure à celle obtenue avec une couche étanche conventionnelle en caoutchouc butyl. Mais ce document ne donne aucune indication sur les caractéristiques physiques des compositions.

**Description brève de l'invention**

Ainsi, l'invention concerne un objet pneumatique ou article gonflable pourvu d'une couche élastomère étanche aux gaz, comportant, à titre de seul élastomère ou d'élastomère majoritaire en poids, au moins un élastomère thermoplastique à bloc polyisobutylène et une charge lamellaire, caractérisé en ce que, Z étant une direction normale à ladite couche élastomère étanche, X et Y deux directions orthogonales à Z, et $E'_X$, $E'_Y$ et $E'_Z$ étant les modules dynamiques en compression de ladite couche élastomère étanche dans respectivement les directions X, Y et Z, on a :

$$E'_X/E'_Z > 1{,}2 \text{ et } E'_Y/E'_Z > 1{,}2.$$

De préférence, on a :

$$E'_X/E'_Z > 1{,}5 \text{ et } E'_Y/E'_Z > 1{,}5.$$

La couche étanche au gaz fortement anisotrope ainsi définie a l'avantage de présenter une perméabilité aux gaz beaucoup plus faible dans la direction Z, normale à la couche étanche, qu'une couche étanche de même composition mais au comportement mécanique isotrope.

L'invention concerne plus particulièrement les bandages pneumatiques destinés à équiper des véhicules à moteur de type tourisme, SUV (*"Sport Utility Vehicles"*), deux roues (notamment motos), avions, comme des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, autres véhicules de transport ou de manutention.

## I. DESCRIPTION DE LA FIGURE

L'invention ainsi que ses avantages seront aisément compris à la lumière de la description et des exemples de réalisation qui suivent, ainsi que de la figure annexée suivante dans laquelle :

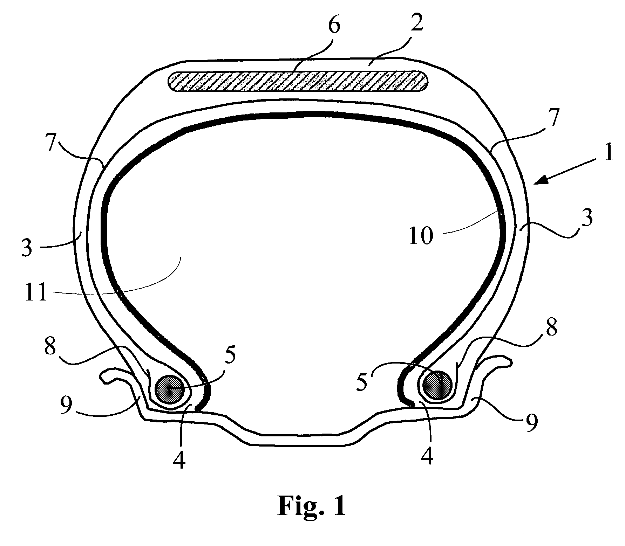

- la figure 1 représente de manière très schématique une coupe radiale d'un bandage pneumatique conforme à l'invention.

## II. DESCRIPTION DETAILLEE DE L'INTENTION

Dans la présente description, sauf indication expresse différente, tous les pourcentages (%) indiqués sont des % en masse. On entend par pourcentage volumique d'un constituant d'une composition, le pourcentage en volume de ce constituant rapporté au volume de l'ensemble de la composition.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

### II-1. Composition élastomère étanche aux gaz

L'objet pneumatique selon l'invention est pourvu d'une couche élastomère étanche aux gaz de gonflage, comportant au moins, à titre de seul élastomère ou d'élastomère majoritaire en poids présent dans ladite composition, un élastomère thermoplastique à bloc polyisobutylène, auquel est associé une charge lamellaire, et optionnellement une huile d'extension de l'élastomère thermoplastique à bloc polyisobutylène.

### II-1-A. Élastomère thermoplastique à bloc polyisobutylène

Les élastomères thermoplastiques ont une structure intermédiaire entre polymères thermoplastiques et élastomères. Ils sont constitués de séquences rigides thermoplastiques reliées par des séquences souples élastomères, par exemple polybutadiène, polyisoprène, poly(éthylène/butylène), ou encore polyisobutylène. Ce sont souvent des élastomères triblocs avec deux segments rigides reliés par un segment souple. Les segments rigides et souples peuvent être disposés linéairement, en étoile ou branchés. Typiquement, chacun de ces segments ou blocs contient au minimum plus de 5, généralement plus de 10 unités de base (par exemple unités styrène et unités isoprène pour un copolymère blocs styrène/ isoprène/ styrène).

La masse moléculaire moyenne en nombre (notée Mn) de l'élastomère thermoplastique à bloc polyisobutylène (ci-après en abrégé « TPEI ») est préférentiellement comprise entre 30 000 et 500 000 g/mol, plus préférentiellement comprise entre 40 000 et 400 000 g/mol. En dessous des minima indiqués, la cohésion entre les chaînes du TPEI, notamment en raison de sa dilution éventuelle (en présence d'une huile d'extension), risque d'être affectée ; d'autre part, une augmentation de la température d'usage risque d'affecter les propriétés mécaniques, notamment les propriétés à la rupture, avec pour conséquence une performance diminuée "à chaud". Par ailleurs, une masse Mn trop élevée peut être pénalisante pour la souplesse de la couche étanche aux gaz. Ainsi, on a constaté qu'une valeur comprise dans un domaine de 50 000 à 300 000 g/mol était particulièrement bien adaptée, notamment à une utilisation de l'élastomère thermoplastique à bloc polyisobutylène ou TPEI dans une composition pour un bandage pneumatique.

La masse moléculaire moyenne en nombre (Mn) du TPEI est déterminée de manière connue, par chromatographie d'exclusion stérique (SEC). L'échantillon est préalablement solubilisé dans du tétrahydrofurane à une concentration d'environ 1 g/l; puis la solution est filtrée sur filtre de porosité 0,45 $\mu$m avant injection. L'appareillage utilisé est une chaîne chromatographique « WATERS alliance ». Le solvant d'élution est le tétrahydrofurane, le débit de 0,7 ml/min, la température du système de 35°C et la durée d'analyse de 90 min. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 $\mu$l. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène.

L'indice de polydispersité Ip (rappel : Ip = Mw/Mn avec Mw masse moléculaire moyenne en poids) du TPEI est de préférence inférieur à 3 ; plus préférentiellement Ip est inférieur à 2 et encore plus préférentiellement inférieur à 1,5.

Le bloc élastomère est composé majoritairement du monomère isobutylène polymérisé. De préférence, le bloc polyisobutylène du copolymère à blocs présente une masse moléculaire moyenne en nombre ("Mn") allant de 25 000 g/mol à 350 000 g/mol, de préférence 35 000 g/mol à 250 000 g/mol de manière à conférer à l'élastomère thermoplastique de bonnes propriétés élastomériques et une tenue mécanique suffisante et compatible avec l'application gomme interne d'un bandage pneumatique.

De préférence, le bloc polyisobutylène du TPEI ou copolymère à blocs présente en outre une température de transition vitreuse ("Tg") inférieure ou égale à - 20°C, plus préférentiellement inférieure à - 40°C. Une valeur de Tg supérieure à ces minima peut diminuer les performances de la couche étanche lors d'une utilisation à très basse température ; pour une telle utilisation, la Tg du bloc polyisobutylène du copolymère à blocs est plus préférentiellement encore inférieure à - 50°C.

Le bloc polyisobutylène du TPEI peut aussi comprendre avantageusement également un taux d'unités issues d'un ou de plusieurs diènes conjugués insérées dans la chaîne polymérique allant préférentiellement jusqu'à 16% en poids par rapport au poids du bloc polyisobutylène. Au dessus de 16%, on peut observer une baisse de la résistance à la thermooxydation et à l'oxydation à l'ozone de la couche étanche contenant l'élastomère thermoplastique à bloc polyisobutylène utilisée dans un pneumatique.

Les diènes conjugués pouvant être copolymérisés avec l'isobutylène pour constituer le bloc polyisobutylène sont des diènes conjugués en $C_4$ - $C_{14}$. De préférence, ces diènes conjugués sont choisis parmi l'isoprène, le butadiène, le 1-méthylbutadiène, le 2- méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 1,3-hexadiène, le 2-méthyl-1,3-hexadiène, le 3-méthyl-1,3-hexadiène, le 4-méthyl-1,3-hexadiène, le 5-méthyl-1,3-hexadiène, le 2,3-diméthyl-1,3-hexadiène, le 2,4-diméthyl-1,3-hexadiène, le 2,5-diméthyl-1,3-hexadiène, le 2-neopentylbutadiène, le 1,3-cyclopentadiène, le 1,3-cyclohexadiène, 1-vinyl-1,3-cyclohexadiène ou leur mélange. Plus préférentiellement le diène conjugué est l'isoprène ou un mélange contenant de l'isoprène.

Le bloc polyisobutylène, selon un aspect avantageux d'un objet de l'invention, peut être halogéné et comporter des atomes d'halogène dans sa chaîne. Cette halogénation permet d'améliorer la compatibilité de la couche étanche avec les autres éléments adjacents constitutifs de l'objet pneumatique, notamment d'un bandage pneumatique. L'halogénation se fait au moyen de brome ou de chlore, préférentiellement du brome, sur les unités issues de diènes conjugués de la chaîne polymérique du bloc polyisobutylène. Seule une partie de ces unités réagit avec l'halogène.

Selon un premier mode de réalisation, le TPEI est choisi parmi les élastomères thermoplastiques styréniques à bloc polyisobutylène (« TPSI »).

Le ou les blocs thermoplastiques complémentaires du bloc polyisobutylène (notés ci-après « Bloc Complémentaire ») sont ainsi constitués d'au moins un monomère polymérisé à base de styrène, non substitué comme substitué ; parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertio-butylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène.

De préférence, l'élastomère thermoplastique TPSI est un copolymère à blocs polystyrène et polyisobutylène.

Préférentiellement, un tel copolymère blocs est un copolymère dibloc styrène/ isobutylène (en abrégé « SIB »).

Plus préférentiellement encore, un tel copolymère blocs est un copolymère tribloc styrène/ isobutylène/ styrène (en abrégé « SIBS »).

Selon un mode de réalisation préférentiel de l'invention, le taux pondéral de styrène (non substitué ou substitué) dans l'élastomère styrénique est compris entre 5% et 50%. En dessous du minimum indiqué, le caractère thermoplastique de l'élastomère risque de diminuer de manière sensible tandis qu'au-dessus du maximum préconisé, l'élasticité de la couche étanche peut être affectée. Pour ces raisons, le taux de styrène est plus préférentiellement compris entre 10 et 40%, en particulier entre 15 et 35%.

De préférence, les températures de transition vitreuse des Blocs Complémentaires constitués à partir de monomères polymérisés styréniques sont supérieures ou égales à 100°C, préférentiellement supérieures ou égales à 130°C, encore plus préférentiellement supérieures ou égales à 150°C, voire même supérieures ou égales à 200°C.

L'élastomère TPSI, étendu optionnellement avec une huile polybutène, est préférentiellement le seul élastomère thermoplastique constituant de la matrice de la couche élastomère étanche aux gaz.

Les élastomères TPSI peuvent être mis en oeuvre de façon classique, par extrusion ou moulage, par exemple à partir d'une matière première disponible sous la forme de billes ou de granulés.

Les élastomères TPSI sont disponibles commercialement, vendus par exemple en ce qui concerne les SIB et SIBS par la société KANEKA sous la dénomination « SIBSTAR » (e.g. "Sibstar 103T", "Sibstar 102T", "Sibstar 073T" ou "Sibstar 072T" pour les SIBS, "Sibstar 042D" pour les SIB). Ils ont par exemple été décrits, ainsi que leur synthèse, dans les documents brevet EP 731 112, US 4 946 899, US 5 260 383. Ils ont été développés tout d'abord pour des applications biomédicales puis décrits dans diverses applications propres aux élastomères TPSI, aussi variées que matériel médical, pièces pour automobile ou pour électroménager, gaines pour fils électriques, pièces d'étanchéité ou élastiques (voir par exemple EP 1 431 343, EP 1 561 783, EP 1 566 405, WO 2005/103146).

Selon un second mode de réalisation, les élastomères TPEI peuvent aussi comprendre au moins un Bloc Complémentaire constitué à partir de monomères polymérisés autres que des monomères styréniques (en abrégé « TPNSI »). De tels monomères peuvent être choisis parmi les composés suivants et leurs mélanges :

- l'acénaphthylène : l'homme de l'art pourra par exemple se référer à l'article de Z. Fodor et J.P. Kennedy, Polymer Bulletin 1992 29(6) 697-705 ;
- l'indène et ses dérivés tels que par exemple le 2-méthylindène, le 3-méthylindène, le 4-méthylindène, les diméthyl-indène, le 2-phénylindène, le 3-phénylindène et le 4-phénylindène ; l'homme de l'art pourra par exemple se référer au document de brevet US4946899, par les inventeurs Kennedy, Puskas, Kaszas et Hager et aux documents J. E. Puskas, G. Kaszas, J.P. Kennedy, W.G. Hager Journal of Polymer Science Part A : Polymer Chemistry (1992) 30, 41 et J.P. Kennedy, N. Meguriya, B. Keszler, Macromolecules (1991) 24(25), 6572-6577 ;
- l'isoprène, conduisant alors à la formation d'un certain nombre d'unités polyisoprène 1,4-trans et d'unités cyclisées selon un processus intramoléculaire ; l'homme de l'art pourra par exemple se référer aux documents G. Kaszas, J.E. Puskas, .P. Kennedy Applied Polymer Science (1990) 39(1) 119-144 et J.E. Puskas, G. Kaszas, J.P. Kennedy, Macromolecular Science, Chemistry A28 (1991) 65-80 ;
- les esters de l'acide acrylique, de l'acide crotonique, de l'acide sorbique, de l'acide méthacrylique, les dérivés de l'acrylamide, les dérivés du méthacrylamide, les dérivés de l'acrylonitrile, les dérivés du méthacrylonitrile et leurs mélanges. On peut citer plus particulièrement, l'acrylate d'adamantyle, le crotonate d'adamantyle, le sorbate d'adamantyle, l'acrylate de 4-biphénylyle, l'acrylate de tertio-butyle, l'acrylate de cyanométhyle, l'acrylate de 2-cyanoéthyle, l'acrylate de 2-cyanobutyle, l'acrylate de 2-cyanohexyle, l'acrylate de 2-cyanoheptyle, l'acrylate de 3,5-diméthyladamantyle, le crotonate de 3,5-diméthyladamantyle, l'acrylate d'isobornyle, l'acrylate de pentachlorobenzyle, l'acrylate de pentaflurobenzyle, l'acrylate de pentachlorophényle, l'acrylate de pentafluorophényle, le méthacrylate d'adamantyle, le méthacrylate de 4-tert-butylcyclohexyle, le méthacrylate de tert-butyle, le méthacrylate de 4-tert-butylphényle, le méthacrylate de 4-cyanophényle, le méthacrylate de 4-cyanométhylphényle, le méthacrylate de cyclohexyle, le méthacrylate de 3,5-diméthyladamantyle, le méthacrylate de diméthylaminoéthyle, le méthacrylate de 3,3-diméthylbutyle, l'acide méthacrylique, le méthacrylate de méthyle, le méthacrylate d'éthyle, le méthacrylate de phényle, le méthacrylate d'iso-bornyle, le méthacrylate de tétradécyle, le méthacrylate de triméthylsilyle, le méthacrylate de 2,3-xylényle, le méthacrylate de 2,6-xylényle, l'acrylamide, le N-sec-butylacrylamide, le N-tert-butylacrylamide, le N,N-diisopropylacrylamide, le N-1méthylbutylacrylamide, le N-méthyl-N-phénylacrylamide, le morpholylacrylamide, le pipéridylacrylamide, le N-tert-butylméthacrylamide, le 4-butoxycarbonylphénylméthacrylamide, le 4-carboxyphénylméthacrylamide, le 4-méthoxycarbonylphénylméthacrylamide, le 4-éthoxycarbonylphénylméthacrylamide, le cyanoacrylate de butyle, le chloroacrylate de méthyle, le chloroacrylate d'éthyle, le chloroacrylate d'isopropyle, le chloroacrylate d'isobutyle, le chloroacrylate de cyclohexyle, le fluorométhacrylate de méthyle, le phénylacrylate de méthyle, l'acrylonitrile, le méthacrylonitrile, et leurs mélanges.

De préférence, les températures de transition vitreuse de ces Blocs Complémentaires constitués à partir de monomères polymérisés autres que des monomères styréniques sont supérieures ou égales à 100°C, préférentiellement supérieures ou égales à 130°C, encore plus préférentiellement supérieures ou égales à 150°C, voire même supérieures ou égales à 200°C.

Selon une variante, le monomère polymérisé autre qu'un monomère styrénique peut être copolymérisé avec au moins un autre monomère de manière à former un bloc thermoplastique rigide. Selon cet aspect, la fraction molaire en monomère polymérisé autre qu'un monomère styrénique, par rapport au nombre total de motifs du bloc thermoplastique, doit être suffisante pour atteindre une Tg supérieure ou égale à 100°C, préférentiellement supérieure ou égale à 130°C, encore plus préférentiellement supérieure ou égale à 150°C, voire même supérieure ou égale à 200°C. Avantageusement la fraction molaire de cet autre co-monomère peut aller de 0 à 90%, plus préférentiellement de 0 à 75% et encore plus préférentiellement de 0 à 50%.

A titre d'illustration, cet autre monomère susceptible de copolymériser avec le monomère polymérisé autre qu'un monomère styrénique, peut être choisi parmi les monomères diènes, plus particulièrement, les monomères diènes conjugués ayant 4 à 14 atomes de carbone, et les monomères de type vinylaromatiques ayant de 8 à 20 atomes de carbone.

Lorsque le co-monomère est un diène conjugué ayant 4 à 14 atomes de carbone, il représente avantageusement une fraction molaire par rapport au nombre total de motifs du bloc thermoplastique allant de 0 à 25%. A titre de diènes conjugués utilisables dans les blocs thermoplastiques selon un objet de l'invention conviennent ceux décrit plus haut, à savoir l'isoprène, le butadiène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 2,5-diméthyl-1,3-pentadiène, le 1,3-hexadiène, le 2-méthyl-1,3-hexadiène, le 3-méthyl-1,3-hexadiène, le 4-méthyl-1,3-hexadiène, le 5-méthyl-1,3-hexadiène, le 2,5-diméthyl-1,3-hexadiène, le 2-néopentylbutadiène, le 1,3-cyclopentadiène, le 1,3-cyclohexadiène, 1-vinyl-1,3-cyclohexadiène ou leurs mélanges.

Lorsque le co-monomère est de type vinylaromatique, il représente avantageusement une fraction en motifs sur le nombre total de motifs du Bloc Complémentaire de 0 à 90%, préférentiellement allant de 0 à 75% et encore plus préférentiellement allant de 0 à 50%. A titre de composés vinylaromatiques conviennent notamment les monomères styréniques cités plus haut, à savoir les méthylstyrènes, le para-tertio-butylstyrène, les chlorostyrènes, les bromostyrènes, les fluorostyrènes ou encore le para-hydroxy-styrène. De préférence, le co-monomère de type vinylaromatique est le styrène.

On peut citer à titre d'exemples illustratifs mais non limitatifs, des mélanges de co-monomères et pouvant être utilisés pour la préparation des Blocs Complémentaires, constitués d'indène et de dérivés du styrène, notamment le para-méthylstyrène ou le para-tertiobutyle styrène. L'homme de l'art pourra alors se référer aux documents J.E. Puskas, G. Kaszas, J.P. Kennedy, W.G. Hager, Journal of Polymer Science part A : Polymer Chemistry 1992 30, 41 ou J.P. Kennedy, S. Midha, Y. Tsungae, Macromolecules (1993) 26, 429.

Préférentiellement, un élastomère thermoplastique TPNSI est un copolymère dibloc : bloc thermoplastique / bloc isobutylène. Plus préférentiellement encore, un tel élastomère thermoplastique TPNSI est un copolymère tribloc : bloc thermoplastique / bloc isobutylène / bloc thermoplastique.

L'élastomère thermoplastique à blocs selon l'invention TPSI ou TPNSI tel que défini précédemment peut constituer à lui seul la matrice de la composition élastomère ou bien être associé, dans cette composition, à d'autres constituants pour former une matrice élastomérique.

Si d'éventuels autres élastomères sont utilisés dans cette composition, le copolymère bloc tel que décrit précédemment constitue l'élastomère majoritaire en poids, c'est-à-dire que la fraction pondérale du copolymère bloc par rapport à l'ensemble des élastomères constituants de la matrice élastomère est la plus élevée. Le copolymère bloc représente de préférence plus de 50%, plus préférentiellement plus de 70% en poids de l'ensemble des élastomères. De tels élastomères complémentaires pourraient être par exemple des élastomères diéniques ou des élastomères thermoplastiques styréniques (TPS), dans la limite de la compatibilité de leurs microstructures.

A titre d'élastomères diéniques utilisables en complément du copolymère bloc précédemment décrit peuvent être cités notamment les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères isoprène-isobutylène (IIR) ainsi que leurs versions halogénées, les copolymères d'isoprène-butadiène-styrène (SBIR) et les mélanges de tels copolymères.

A titre d'élastomère thermoplastique TPE utilisable en complément du copolymère bloc précédemment décrit peut être cité notamment un élastomère TPS choisi dans le groupe constitué par les copolymères à blocs styrène/ butadiène/ styrène (SBS), les copolymères à blocs styrène/ isoprène/ styrène (SIS), styrène/ butylène/ styrène, les copolymères à blocs styrène/ butadiène/ isoprène/ styrène (SBIS), les copolymères à blocs styrène/ éthylène/ butylène/ styrène (SEBS), les copolymères à blocs styrène/ éthylène/ propylène/ styrène (SEPS), les copolymères à blocs styrène/ éthylène/ éthylène/ propylène/ styrène (SEEPS), les copolymères à blocs styrène/ éthylène/ éthylène/ styrène (SEES) et les mélanges de ces copolymères. Plus préférentiellement, ledit élastomère TPS complémentaire éventuel est choisi dans le groupe constitué par les copolymères à blocs SEBS, les copolymères à blocs SEPS et les mélanges de ces copolymères.

II-1-B. Charge lamellaire

Une caractéristique essentielle de la couche étanche ou article gonflable selon l'un des objets de l'invention est de comporter une charge lamellaire. L'utilisation de charge lamellaire permet avantageusement d'abaisser le coefficient de perméabilité (donc d'augmenter l'étanchéité) de la composition élastomère, sans augmenter de façon excessive son module, ce qui permet de conserver la facilité d'intégration de la couche étanche dans l'objet pneumatique.

Les charges dites lamellaires (en anglais "*platy fillers*") sont bien connues de l'homme du métier. Elles ont été utilisées notamment dans des bandages pneumatiques pour réduire la perméabilité des couches étanches aux gaz conventionnelles à base de caoutchouc butyl. Dans ces couches à base de butyl, elles sont généralement utilisées à des taux relativement faibles, n'excédant pas le plus souvent 10 à 15 parties en poids pour cent parties d'élastomère (« pce ») (voir par exemple les documents brevet US 2004/0194863, WO 2006/047509).

Elles se présentent généralement sous forme de plaques, plaquettes, feuilles ou feuillets empilés, avec une anisométrie plus ou moins marquée. Leur rapport de forme (F = L/E) est généralement supérieur à 3, plus souvent supérieur à 5 ou à 10, L représentant la longueur (ou plus grande dimension) et E l'épaisseur moyenne de ces charges lamellaires, ces moyennes étant calculées en nombre. Des rapports de forme atteignant plusieurs dizaines voire centaines sont fréquents. Leur longueur moyenne est de préférence supérieure à 1 μm (c'est-à-dire qu'il s'agit alors de charges lamellaires dites micrométriques), typiquement comprise entre quelques μm (par exemple 5 μm) et quelques centaines de μm (par exemple 500 voire 800 μm).

Préférentiellement, les charges lamellaires utilisées sont choisies dans le groupe constitué par les graphites, les phyllosilicates et les mélanges de telles charges. Parmi les phyllosilicates, on citera notamment les argiles, talcs, micas, kaolins, ces phyllosilicates pouvant être modifiés ou non par exemple par un traitement de surface ; à titre d'exemples de tels phyllosilicates modifiés, on peut citer notamment des micas recouverts d'oxyde de titane, des argiles modifiées par des tensioactifs (*"organo clays"*).

On utilise préférentiellement des charges lamellaires à faible énergie de surface, c'est-à-dire relativement apolaires, telles que celles choisies dans le groupe constitué par les graphites, les talcs, les micas et les mélanges de telles charges, ces dernières pouvant être modifiées ou non, plus préférentiellement encore dans le groupe constitué par les micas et les mélanges de telles charges.

Parmi les graphites peuvent être cités notamment les graphites naturels, les graphites expansés ou les graphites synthétiques.

Comme exemple de talcs, on peut citer les talcs commercialisés par la société Luzenac.

Comme exemples de graphites, on peut citer les graphites commercialisés par la société Timcal (gamme « Timrex »).

Comme exemples de micas, on peut citer les micas commercialisés par la société CMMP (« Mica-MU », « Mica-Soft », « Briomica » par exemple), ceux commercialisés par la société YAMAGUCHI (A51S, A41S, SYA-21R, SYA-21RS, A21S, SYA-41R), les vermiculites (notamment la vermiculite « Shawatec » commercialisée par CMMP ou la vermiculite « Microlite » commercialisée par W.R. Grace), les micas modifiés ou traités (par exemple, la gamme « Iriodin » commercialisée par Merck).

Les charges lamellaires décrites ci-dessus peuvent être utilisées à des taux variables, notamment compris entre 2 et 30 % et de préférence entre 3 et 20 % en volume de composition élastomère.

L'introduction des charges lamellaires dans la composition thermoplastique élastomère peut être réalisée selon divers procédés connus, par exemple par extrusion bi-vis.

Il est particulièrement intéressant de noter que lors de l'introduction des charges lamellaires dans un élastomère thermoplastique à blocs à l'état liquide, les efforts de cisaillement dans la composition sont très réduits et ne modifient que très peu les distributions de taille et le facteur de forme initial des charges lamellaires.

II-1-C. Huile d'extension

Les élastomères thermoplastiques à bloc polyisobutylène et les charges lamellaires précédemment décrits sont suffisants à eux seuls pour que soit remplie la fonction d'étanchéité aux gaz vis-à-vis des objets pneumatiques dans lesquels ils sont utilisés.

Toutefois, selon un mode de réalisation préférentiel de l'invention, la composition élastomère précédemment décrite comporte également, à titre d'agent plastifiant, une huile d'extension (ou huile plastifiante) dont la fonction est de faciliter la mise en oeuvre de la couche étanche aux gaz, particulièrement son intégration dans l'objet pneumatique par un abaissement du module et une augmentation du pouvoir tackifiant.

On peut utiliser toute huile d'extension, de préférence à caractère faiblement polaire, apte à étendre, plastifier des élastomères, notamment thermoplastiques. A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides.

De préférence, l'huile d'extension est choisie dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité), les huiles aromatiques, les huiles minérales, et les mélanges de ces huiles.

Si l'on a constaté que l'ajout d'huile se faisait certes au prix d'une certaine perte d'étanchéité, variable selon le type et la quantité d'huile utilisée, cette perte d'étanchéité peut être largement corrigée en ajustant le taux de charge lamellaire.

On utilise préférentiellement une huile du type polybutène, en particulier une huile polyisobutylène (en abrégé « PIB »), qui a démontré le meilleur compromis de propriétés comparativement aux autres huiles testées, notamment à une huile conventionnelle du type paraffinique.

A titre d'exemples, des huiles polyisobutylène sont commercialisées notamment par la société UNIVAR sous la dénomination « Dynapak Poly » (e.g. « Dynapak Poly 190 »), par INEOS Oligomer sous la dénomination «Indopol H1200 »), par BASF sous les dénominations « Glissopal » (e.g. « Glissopal 1000 ») ou « Oppanol » (e.g. « Oppanol B12 ») ; des huiles paraffiniques sont commercialisées par exemple par EXXON sous la dénomination « Telura 618 » ou par Repsol sous la dénomination « Extensol 51 ».

La masse moléculaire moyenne en nombre (Mn) de l'huile d'extension est préférentiellement comprise entre 200 et 25 000 g/mol, plus préférentiellement encore comprise entre 300 et 10 000 g/mol. Pour des masses Mn trop basses, il existe un risque de migration de l'huile à l'extérieur de la composition, tandis que des masses trop élevées peuvent entraîner une rigidification excessive de cette composition. Une masse Mn comprise entre 350 et 4 000 g/mol, en particulier entre 400 et 3 000 g/mol, s'est avérée constituer un excellent compromis pour les applications visées, en particulier pour une utilisation dans un bandage pneumatique.

La masse moléculaire moyenne en nombre (Mn) de l'huile d'extension est déterminée par SEC, l'échantillon étant préalablement solubilisé dans du tétrahydrofurane à une concentration d'environ 1 g/l; puis la solution est filtrée sur filtre de porosité 0,45 $\mu$m avant injection. L'appareillage est la chaîne chromatographique « WATERS alliance ». Le solvant d'élution est le tétrahydrofurane, le débit de 1 ml/min, la température du système de 35°C et la durée d'analyse de 30 min. On utilise un jeu de deux colonnes « WATERS » de dénomination « STYRAGEL HT6E ». Le volume injecté de la solution de l'échantillon de polymère est de 100 $\mu$l. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène.

L'homme du métier saura, à la lumière de la description et des exemples de réalisation qui suivent, ajuster la quantité d'huile d'extension en fonction des conditions particulières d'usage de la couche élastomère étanche aux gaz, notamment de l'objet pneumatique dans lequel elle est destinée à être utilisée.

On préfère que le taux d'huile d'extension soit supérieur à 5 parties en poids pour cent parties d'élastomère thermoplastique à bloc polyisobutylène, de préférence compris entre 5 et 150 parties.

En dessous du minimum indiqué, la présence d'huile d'extension n'est pas sensible. Au-delà du maximum préconisé, on s'expose à un risque de cohésion insuffisante de la composition et de perte d'étanchéité pouvant être néfaste selon l'application considérée.

Pour ces raisons, en particulier pour une utilisation de la composition étanche dans un bandage pneumatique, on préfère que le taux d'huile d'extension soit supérieur à 10 parties, notamment compris entre 10 et 130 parties, plus préférentiellement encore qu'il soit supérieur à 20 parties, notamment compris entre 20 et 100 parties.

II-1-D. Additifs divers

La couche ou composition étanche à l'air décrite précédemment peut comporter par ailleurs les divers additifs usuellement présents dans les couches étanches à l'air connues de l'homme du métier. On citera par exemple des charges renforçantes telles que du noir de carbone ou de la silice, des charges non renforçantes ou inertes autres que les charges précédemment décrites, des agents colorants avantageusement utilisables pour la coloration de la composition, des plastifiants autres que les huiles d'extension précitées, des résines tackifiantes, des agents de protection tels que antioxydants ou antiozonants, anti-UV, divers agents de mise en oeuvre ou autres stabilisants, ou encore des promoteurs aptes à favoriser l'adhésion au reste de la structure de l'objet pneumatique.

La couche ou composition étanche aux gaz précédemment décrite est un composé solide (à 23°C) et élastique, qui se caractérise notamment, grâce à sa formulation spécifique, par une très haute souplesse et très haute déformabilité.

II-2. Fabrication de la composition élastomère étanche

La fabrication de la composition élastomère étanche est avantageusement réalisée au moyen d'un outil d'extrusion, préférentiellement avec une extrudeuse bi-vis. Une telle extrudeuse permet d'obtenir à la fois la fusion du ou des constituants thermoplastiques de la composition et leur malaxage intime avec les autres constituants de la composition.

On considère $T_{M1}$, la température de fusion ou de ramollissement donnée de l'élastomère thermoplastique à bloc.

Le procédé de fabrication comporte les étapes suivantes :

- introduire l'élastomère thermoplastique et les autres constituants de la composition, notamment les charges lamellaires, dans une ou plusieurs alimentations de l'extrudeuse bi-vis ;
- faire fondre et malaxer les constituants en portant l'ensemble à une température de malaxage ($T_M$) supérieure à la température de fusion ou de ramollissement donnée ($T_{M1}$) pendant le transfert dans le corps de l'extrudeuse bi-vis ; et
- distribuer la composition résultante à la sortie de l'extrudeuse bi-vis avec une filière de section adaptée.

Le corps de l'extrudeuse bi-vis est porté à une température $T_M$ supérieure à la température de fusion ou de ramollissement de l'élastomère thermoplastique à bloc polyisobutylène de la composition. Cela permet d'assurer, pendant le transfert des constituants dans le corps de l'extrudeuse, à la fois la fusion du constituant thermoplastique et son malaxage. L'écart de température doit être supérieur à 5°C pour que la fusion soit complète et est de préférence supérieure à 10°C.

A la sortie de l'extrudeuse bi-vis, on peut installer une filière de section adaptée pour l'usage prévu de la couche élastomère étanche. On utilise de préférence une filière plate pour obtenir un profilé plat prêt à être introduit dans l'ébauche du bandage pneumatique.

A la sortie de la filière, comme bien connu par un homme du métier, le profilé peut être reçu par un intercalaire de protection placé sur un tapis mobile et ensuite stocké sous forme de bobine.

On peut introduire en même temps que l'élastomère thermoplastique à bloc polyisobutylène ou ultérieurement l'huile d'extension optionnelle de la composition et les additifs éventuels.

II-3. Utilisation de la couche étanche à l'air dans un bandage pneumatique

La composition à base d'élastomère thermoplastique précédemment décrite est utilisable comme couche étanche à l'air dans tout type d'objet pneumatique ou article gonflable. A titre d'exemples de tels objets pneumatiques ou articles gonflables, on peut citer les bateaux pneumatiques, les ballons ou balles utilisées pour le jeu ou le sport.

Elle est particulièrement bien adaptée à une utilisation comme couche étanche à l'air (ou tout autre gaz de gonflage, par exemple azote) dans un objet pneumatique, produit fini ou semi-fini, en caoutchouc, tout particulièrement dans une chambre à air, dans une chambre à air de bandage pneumatique, ainsi que dans un bandage pneumatique pour véhicule automobile tel qu'un véhicule de type deux roues, tourisme ou industriel.

Une telle couche étanche à l'air est préférentiellement disposée sur la paroi interne de l'objet pneumatique, mais elle peut être également intégrée complètement à sa structure interne.

L'épaisseur de la couche étanche à l'air est préférentiellement supérieure à 0,05 mm, plus préférentiellement comprise entre 0,1 mm et 10 mm (notamment entre 0,1 et 1,0 mm).

On comprendra aisément que, selon les domaines d'application spécifiques, les dimensions et les pressions en jeu, le mode de mise en oeuvre de l'invention peut varier, la couche étanche à l'air comportant alors plusieurs gammes d'épaisseur préférentielles.

Ainsi par exemple, pour des bandages pneumatiques de type tourisme, elle peut avoir une épaisseur d'au moins 0,4 mm, préférentiellement comprise entre 0,8 et 2 mm. Selon un autre exemple, pour des bandages pneumatiques de véhicules poids lourds ou agricole, l'épaisseur préférentielle peut se situer entre 1 et 3 mm. Selon un autre exemple, pour des bandages pneumatiques de véhicules dans le domaine du génie civil ou pour avions, l'épaisseur préférentielle peut se situer entre 2 et 10 mm.

## III. EXEMPLES DE RÉALISATION DE L'INVENTION

La couche étanche aux gaz précédemment décrite est avantageusement utilisable dans les bandages pneumatiques de tous types de véhicules, en particulier véhicules tourisme ou véhicules industriels tels que Poids-lourd.

A titre d'exemple, la fig. 1 annexée représente de manière très schématique (sans respect d'une échelle spécifique), une coupe radiale d'un bandage pneumatique conforme à l'invention.

Ce bandage pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits « radiaux », par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

La paroi interne du bandage pneumatique 1 comporte une couche 10 étanche à l'air, par exemple d'épaisseur égale à environ 0,9 mm, du côté de la cavité interne 11 du bandage pneumatique 1.

Cette couche interne (ou gomme intérieure, en anglais *"inner liner"*) couvre toute la paroi interne du bandage pneumatique, se prolongeant d'un flanc à l'autre, au moins jusqu'au niveau du crochet de jante lorsque le bandage pneumatique est en position montée. Elle définit la face radialement interne dudit bandage destinée à protéger l'armature de carcasse de la diffusion d'air provenant de l'espace 11 intérieur au bandage. Elle permet le gonflement et le maintien sous pression du bandage pneumatique ; ses propriétés d'étanchéité doivent lui permettre de garantir un taux de perte de pression relativement faible, de maintenir le bandage gonflé, en état de fonctionnement normal, pendant une durée suffisante, normalement de plusieurs semaines ou plusieurs mois.

Contrairement à un bandage pneumatique conventionnel utilisant une composition à base de caoutchouc butyl, le bandage pneumatique conforme à l'invention utilise dans cet exemple, comme couche 10 étanche à l'air, une composition élastomère comportant un élastomère SIBS (« Sibstar 102T » avec un taux de styrène d'environ 15 %, une Tg du bloc polyisobutylène d'environ -65°C et une Mn d'environ 90 000 g/mol) et une charge lamellaire à un taux de 5% volumique (Yamaguchi Mica SYA21R), cette composition étant ici étendue avec une huile PIB (par exemple 66 parties d'huile « H-1200 INEOS »).

Le pneumatique pourvu de sa couche étanche à l'air 10 tel que décrit ci-dessus peut être réalisé avant ou après vulcanisation (ou cuisson).

Dans le premier cas (i.e. avant cuisson du bandage pneumatique), la couche étanche à l'air est simplement appliquée de façon conventionnelle à l'endroit souhaité, pour formation de la couche 10. La vulcanisation est ensuite effectuée classiquement.

Une variante de fabrication avantageuse, pour l'homme du métier des bandages pneumatiques, consiste par exemple au cours d'une première étape, à déposer à plat la couche étanche à l'air directement sur un tambour de confection, sous la forme d'une couche ("skim") d'épaisseur adaptée, avant de recouvrir cette dernière avec le reste de la structure du bandage pneumatique, selon des techniques de fabrication bien connues de l'homme du métier.

Dans le second cas (i.e. après cuisson du bandage pneumatique), la couche étanche est appliquée à l'intérieur du bandage pneumatique cuit par tout moyen approprié, par exemple par collage, par pulvérisation ou encore extrusion et application directe d'un profilé d'épaisseur appropriée.

III-1. Tests

A Test d'étanchéité

Dans les exemples qui suivent, les propriétés d'étanchéité ont été analysées sur des éprouvettes de compositions à base d'élastomère thermoplastique avec charge lamellaire et de procédés d'obtention variables.

Pour cette analyse, on a utilisé un perméamètre à parois rigides, placé dans une étuve (température de 60°C dans le cas présent), muni d'un capteur de pression relative (étalonné dans le domaine de 0 à 6 bars) et relié à un tube équipé d'une valve de gonflage. Le perméamètre peut recevoir des éprouvettes standard sous forme de disque (par exemple de diamètre 65 mm dans le cas présent) et d'épaisseur uniforme pouvant aller jusqu'à 3 mm (0,5 mm dans le cas présent). Le capteur de pression est connecté à une carte d'acquisition de données *National Instruments* (acquisition quatre voies analogiques 0-10 V) qui est reliée à un ordinateur réalisant une acquisition en continu avec une fréquence de 0,5 Hz (1 point toutes les deux secondes). Le coefficient de perméabilité (K) est mesuré à partir de la droite de régression linéaire donnant la pente $\alpha$ de la perte de pression à travers l'éprouvette testée en fonction du temps, après stabilisation du système c'est-à-dire obtention d'un régime stable au cours duquel la pression décroît linéairement en fonction du temps. La pression initiale de mesure est par exemple comprise entre 4 et 3,4 bars. Une valeur arbitraire de 100 est donnée pour l'étanchéité à l'air du témoin, un résultat supérieur à 100 indiquant une augmentation de l'étanchéité à l'air donc une diminution de la perméabilité.

B Caractérisations dynamiques

Les caractérisations dynamiques sont réalisées sur un analyseur mécanique dynamique DMA+450 de la société ACOEM. L'analyseur est équipé de plateaux de compression PET10003000B.

Les échantillons sont des échantillons cylindriques de diamètre 10 mm et de hauteur 12 mm. Ils sont disposés sans collage au centre des plateaux de compression.

L'essai consiste, à une température fixe de 40°C et une fréquence de 1 Hz, à appliquer une contrainte de compression statique de 25,5 kPa à laquelle vient s'ajouter une contrainte dynamique de +/- 3,8 kPa.

Le module dynamique réel E' est relevé au bout de 30 minutes, temps pour lequel la valeur est stable.

III-2. Essais

A Formulation

Une composition étanche aux gaz contenant les composants présentés dans le tableau 1 a été préparée selon deux modes de réalisation différents.

Le taux de plastifiant est exprimé en pce, ceux de charge lamellaire en % volumique (par rapport au volume total de la composition d'élastomère SIBS) ainsi qu'en pce (par rapport au poids d'élastomère SIBS). Par « pce » on entend ici partie en poids pour 100 parties massiques d'élastomère SIBS.

**Tableau 1**

| Composition | |
|---|---|
| SIBS - Sibstar 102 T - KANEKA - (pce) | 100 |
| Huile PIB H1200 - INEOS - (pce) | 66,7 |
| SYA21R YAMAGUCHI - % volumique (pce) | 5 % (27,2) |

La masse volumique du SIBS est de 0,94 g/cm$^3$, celle de l'huile PIB de 0,89 g/cm$^3$ et celle du mica SYA21R de 2,85 g/cm$^3$.

B Préparation des échantillons

Une couche élastomère étanche de composition telle que décrite dans le tableau 1 a été réalisée au moyen d'une extrudeuse bi-vis.
L'épaisseur de la couche après refroidissement était de 0,5 mm. Des feuilles de 150 mm par 150 mm ont été découpées dans cette couche élastomère étanche.
On considère :

- X, la direction d'extrusion (dans le plan des feuilles) ;
- Y, la direction orthogonale à X dans le plan de la feuille, ou sens transverse ; et
- Z, la direction normale à la feuille.

Pour obtenir les échantillons nécessaires aux essais de mesures dynamiques pour la couche élastomère étanche telle qu'obtenue directement (Éprouvettes A), on a assemblé plusieurs feuilles sous presse, puis l'ensemble a été porté à 180°C sous une pression de 4 bars pendant 10 minutes et une plaque d'épaisseur de l'ordre de 12 mm a été obtenue.
Après refroidissement, des éprouvettes cylindriques d'épaisseur 12 mm et de diamètre 10 mm ont été découpées dans la plaque selon les trois orientations définies, X, Y et Z.
Pour obtenir des échantillons isotropes (Éprouvettes **B**), on a plongé dans l'azote liquide plusieurs feuilles de la couche étanche élastomère, puis on a broyé en une fine poudre celles-ci. La poudre a ensuite été dispersée dans un moule qui a été mis en presse avec une pression très faible pour obtenir d'une part une couche d'épaisseur de l'ordre de 0,5 mm pour le test de perméabilité et d'autre part une plaque de dimensions similaires à la précédente en limitant les mouvements de matière.
Après refroidissement, comme précédemment des éprouvettes cylindriques ont été découpées dans la plaque selon les trois orientations définies.

C Résultats des essais

Le tableau 2 présente les résultats des essais d'étanchéité et de mesures dynamiques réalisés sur ces éprouvettes.

**Tableau 2**

| Résultats | B | A |
|---|---|---|
| $E'_X$ (MPa) | 1,25 | 1,6 |
| $E'_Y$ (MPa) | 1,25 | 1,6 |
| $E'_Z$ (MPa) | 1,25 | 1,0 |
| étanchéité relative (%) | 100 | **127** |

On constate que les échantillons B présentent un comportement mécanique dynamique isotrope.
En revanche, les échantillons A présentent une forte anisotropie de module dynamique en compression : les rapports entre les modules dynamiques en compression dans les directions de la plaque et la direction normale à la plaque sont de l'ordre de 1,6.

Cette anisotropie s'accompagne d'une très forte amélioration de la performance d'étanchéité relative à l'air.

Il est donc très utile pour améliorer la performance d'étanchéité à l'air des matériaux à base de SIBS et de charges lamellaires de privilégier les procédés de mise en oeuvre permettant de générer des matériaux anisotropes tels que :

$$E'_X\big/E'_Z > 1{,}2 \text{ et } E'_Y\big/E'_Z > 1{,}2$$

et de préférence tels que

$$E'_X\big/E'_Z > 1{,}5 \text{ et } E'_Y\big/E'_Z > 1{,}5.$$

## Revendications

1. Objet pneumatique ou article gonflable pourvu d'une couche élastomère étanche aux gaz, comportant, à titre de seul élastomère ou d'élastomère majoritaire en poids, au moins un élastomère thermoplastique à bloc polyisobutylène et une charge lamellaire, **caractérisé en ce que**, Z étant une direction normale à ladite couche élastomère étanche, X et Y deux directions orthogonales à Z, et $E'_X$, $E'_Y$ et $E'_Z$ étant les modules dynamiques en compression de ladite couche élastomère étanche dans respectivement les directions X, Y et Z, on a :

$$E'_X\big/E'_Z > 1{,}2 \text{ et } E'_Y\big/E'_Z > 1{,}2.$$

2. Objet pneumatique ou article gonflable selon la revendication 1, dans lequel on a :

$$E'_X\big/E'_Z > 1{,}5 \text{ et } E'_Y\big/E'_Z > 1{,}5.$$

3. Objet pneumatique ou article gonflable selon l'une quelconque des revendications précédentes, dans lequel la masse moléculaire moyenne en nombre de l'élastomère thermoplastique à bloc polyisobutylène est comprise entre 30 000 et 500 000 g/mol.

4. Objet pneumatique ou article gonflable selon l'une quelconque des revendications précédentes, dans lequel l'élastomère thermoplastique à bloc polyisobutylène comporte au moins un bloc thermoplastique complémentaire constitué d'au moins un monomère polymérisé choisi dans le groupe des styrène, méthylstyrènes, para-tertio-butylstyrène, chlorostyrènes, bromostyrènes, fluorostyrènes, para-hydroxy-styrène, l'acénaphthylène, l'indène, le 2-méthylindène, le 3-méthylindène, le 4-méthylindène, les diméthyl-indène, le 2-phénylindène, le 3-phénylindène, le 4-phénylindène, l'isoprène, les esters de l'acide acrylique, de l'acide crotonique, de l'acide sorbique, de l'acide méthacrylique, les dérivés de l'acrylamide, les dérivés du méthacrylamide, les dérivés de l'acrylonitrile, les dérivés du méthacrylonitrile.

5. Objet pneumatique ou article gonflable selon la revendication 4, dans lequel ledit monomère polymérisé est choisi dans le groupe des styrènes, méthylstyrènes, para-tertio-butylstyrène, chlorostyrènes, bromostyrènes, fluorostyrènes, para-hydroxy-styrène.

6. Objet pneumatique ou article gonflable selon la revendication 5, dans lequel l'élastomère thermoplastique à bloc polyisobutylène est choisi dans le groupe des copolymères dibloc styrène/ isobutylène (« SIB ») et des copolymères tribloc styrène/ isobutylène/ styrène (« SIBS »).

7. Objet pneumatique ou article gonflable selon la revendication 6, dans lequel l'élastomère thermoplastique à bloc polyisobutylène est un styrène/ isobutylène/ styrène (« SIBS »).

8. Objet pneumatique ou article gonflable selon la revendication 4, dans lequel ledit monomère polymérisé est choisi dans le groupe de l'acénaphthylène, l'indène, le 2-méthylindène, le 3-méthylindène, le 4-méthylindène, les diméthyl-indène, le 2-phénylindène, le 3-phénylindène, le 4-phénylindène, l'isoprène, les esters de l'acide acrylique, de l'acide crotonique, de l'acide sorbique, de l'acide méthacrylique, les dérivés de l'acrylamide, les dérivés du méthacrylamide, les dérivés de l'acrylonitrile, les dérivés du méthacrylonitrile.

9. Objet pneumatique ou article gonflable selon l'une quelconque des revendications précédentes, dans lequel l'élastomère thermoplastique à bloc polyisobutylène est le seul élastomère de la couche étanche.

10. Objet pneumatique selon l'une quelconque des revendications précédentes, dans lequel la couche élastomère étanche comporte en plus une huile d'extension à un taux inférieur à 150 parties pour 100 parties en poids d'élastomère thermoplastique à bloc polyisobutylène, en particulier inférieur à 100 parties et de préférence compris entre 5 et 100 parties.

11. Objet pneumatique ou article gonflable selon la revendication 10, dans lequel l'huile d'extension est du polybutène et préférentiellement du polyisobutylène.

12. Objet pneumatique selon l'une quelconque des revendications précédentes, dans lequel la charge lamellaire de ladite couche élastomère étanche est à un taux compris entre 2 % et 30 % volumique, de préférence entre 3 et 20 % volumique.

13. Objet pneumatique selon l'une quelconque des revendications précédentes, dans lequel la charge lamellaire de ladite couche élastomère étanche est choisie dans le groupe constitué par les graphites, les phyllosilicates, et les mélanges de telles charges.
P10-2833 ECT

14. Objet pneumatique ou article gonflable selon l'une quelconque des revendications précédentes, dans lequel ledit objet est un bandage pneumatique.

15. Objet pneumatique ou article gonflable selon l'une quelconque des revendications 1 à 13, dans lequel ledit objet pneumatique est une chambre à air.

**Patentansprüche**

1. Luftgefüllter Gegenstand oder aufblasbarer Artikel, der mit einer Elastomerschicht versehen ist, die gasdicht ist, wobei sie als einziges Elastomer oder gewichtsmäßig überwiegendes Elastomer mindestens ein thermoplastisches Elastomer mit Polyisobutenblock sowie einen lamellaren Füllstoff aufweist, **dadurch gekennzeichnet, dass**, wenn Z eine Normalrichtung zur dichten Elastomerschicht ist, X und Y rechtwinklige Richtungen zu Z sind, und $E'_X$, $E'_Y$ und $E'_Z$ die dynamischen Kompressionsmodule der dichten Elastomerschicht in den Richtungen X, Y beziehungsweise Z sind, Folgendes gilt:

$$E'_X / E'_Z > 1,2 \quad \text{und} \quad E'_Y / E'_Z > 1,2.$$

2. Luftgefüllter Gegenstand oder aufblasbarer Artikel nach Anspruch 1, wobei Folgendes gilt:

$$E'_X / E'_Z > 1,5 \quad \text{und} \quad E'_Y / E'_Z > 1,5.$$

3. Luftgefüllter Gegenstand oder aufblasbarer Artikel nach einem beliebigen der vorhergehenden Ansprüche, wobei das Zahlenmittel des Molekulargewichts des thermoplastischen Elastomers mit Polyisobutenblock im Bereich von 30.000 bis 500.000 g/mol liegt.

4. Luftgefüllter Gegenstand oder aufblasbarer Artikel nach einem beliebigen der vorhergehenden Ansprüche, wobei das thermoplastische Elastomer mit Polyisobutenblock mindestens einen zusätzlichen thermoplastischen Block aufweist, der aus mindestens einem polymerisierten Monomer besteht, welches aus der Gruppe von Styrol, Methylstyrolen, para-tert.-Butylstyrol, Chlorstyrolen, Bromstyrolen, Fluorstyrolen, para-Hydroxystyrol, Acenaphthylen, Indol, 2-Methylindol, 3-Methylindol, 4-Methylindol, Dimethylindolen, 2-Phenylindol, 3-Phenylindol, 4-Phenylindol, Isopren, Estern der Acrylsäure, der Crotonsäure, der Sorbinsäure, der Methacrylsäure, Acrylamidderivaten, Methacrylamidderivaten, Acrylnitrilderivaten, Methacrylnitrilderivaten ausgewählt ist.

5. Luftgefüllter Gegenstand oder aufblasbarer Artikel nach Anspruch 4, wobei das polymerisierte Monomer aus der Gruppe von Styrolen, Methylstyrolen, paratert.-Butylstyrol, Chlorstyrolen, Bromstyrolen, Fluorstyrolen, para-Hydroxystyrol ausgewählt ist.

6. Luftgefüllter Gegenstand oder aufblasbarer Artikel nach Anspruch 5, wobei das thermoplastische Elastomer mit Polyisobutenblock aus der Gruppe der Styrol/Isobuten-Diblockcopolymere ("SIB") und der Styrol/Isobuten/Styrol-Triblockcopolymere ("SIBS") ausgewählt ist.

7. Luftgefüllter Gegenstand oder aufblasbarer Artikel nach Anspruch 6, wobei das thermoplastische Elastomer mit Polyisobutenblock ein Styrol/Isobuten/Styrol ("SIBS") ist.

8. Luftgefüllter Gegenstand oder aufblasbarer Artikel nach Anspruch 4, wobei das polymerisierte Monomer aus der Gruppe von Acenaphthylen, Indol, 2-Methylindol, 3-Methylindol, 4-Methylindol, Dimethylindolen, 2-Phenylindol, 3-Phenylindol, 4-Phenylindol, Isopren, Estern der Acrylsäure, der Crotonsäure, der Sorbinsäure, der Methacrylsäure, Acrylamidderivaten, Methacrylamidderivaten, Acrylnitrilderivaten, Methacrylnitrilderivaten ausgewählt ist.

9. Luftgefüllter Gegenstand oder aufblasbarer Artikel nach einem beliebigen der vorhergehenden Ansprüche, wobei das thermoplastische Elastomer mit Polyisobutenblock das einzige Elastomer der dichten Schicht darstellt.

10. Luftgefüllter Gegenstand oder aufblasbarer Artikel nach einem beliebigen der vorhergehenden Ansprüche, wobei die dichte Elastomerschicht ein Strecköl aufweist, dessen Anteil weniger als 150 Teile auf 100 Gewichtsteile an thermoplastischem Elastomer mit Polyisobutenblock ausmacht, insbesondere weniger als 100 Teile, und vorzugsweise zwischen 5 und 100 Teile einschließlich der Grenzwerte.

11. Luftgefüllter Gegenstand oder aufblasbarer Artikel nach Anspruch 10, wobei es sich bei dem Strecköl um Polybuten und vorzugsweise um Polyisobuten handelt.

12. Luftgefüllter Gegenstand nach einem beliebigen der vorhergehenden Ansprüche, wobei der lamellare Füllstoff der dichten Elastomerschicht derart vorliegt, dass sein Anteil im Bereich von 2 % bis 30 % Volumen-%, vorzugsweise von 3 bis 20 Volumen-%, liegt.

13. Luftgefüllter Gegenstand nach einem beliebigen der vorhergehenden Ansprüche, wobei der lamellare Füllstoff der dichten Elastomerschicht aus der Gruppe ausgewählt ist, die aus den Graphiten den Schichtsilikaten und den Mischungen derartiger Füllstoffe ausgewählt ist.

14. Luftgefüllter Gegenstand oder aufblasbarer Artikel nach einem beliebigen der vorhergehenden Ansprüche, wobei es sich bei dem Gegenstand um einen Luftreifen handelt.

15. Luftgefüllter Gegenstand oder aufblasbarer Artikel nach einem beliebigen der Ansprüche 1 bis 13, wobei es sich bei dem luftgefüllten Gegenstand um einen Reifenschlauch handelt.

## Claims

1. Pneumatic object or inflatable article provided with a gastight elastomer layer comprising, as the sole elastomer or as the predominant elastomer by weight, at least one thermoplastic polyisobutylene block elastomer and a platy filler, **characterized in that**, Z being a direction normal to said airtight elastomer layer, X and Y two directions orthogonal to Z, and $E_X'$, $E_Y'$ and $E_Z'$ being the dynamic moduli in compression of said airtight elastomer layer respectively in the directions X, Y and Z, the following apply:

$$E'_X\big/E'_Z > 1.2 \text{ and } E'_Y\big/E'_Z > 1.2.$$

2. Pneumatic object or inflatable article according to Claim 1, in which the following apply:

$$E'_X\big/E'_Z > 1.5 \text{ and } E'_Y\big/E'_Z > 1.5.$$

3. Pneumatic object or inflatable article according to either of the preceding claims, in which the number-average molecular weight of the thermoplastic polyisobutylene block elastomer is between 30 000 and 500 000 g/mol.

4. Pneumatic object or inflatable article according to any one of the preceding claims, in which the thermoplastic polyisobutylene block elastomer comprises at least one additional thermoplastic block consisting of at least one polymerized monomer selected from the group consisting of styrene, methylstyrenes, *para*-(*tert*-butyl)styrene, chlorostyrenes, bromostyrenes, fluorostyrenes, *para*-hydroxystyrene, acenaphthylene, indene, 2-methylindene, 3-methylindene, 4-methylindene, dimethylindenes, 2-phenylindene, 3-phenylindene, 4-phenylindene, isoprene, esters of acrylic acid, crotonic acid, sorbic acid and methacrylic acid, derivatives of acrylamide, derivatives of methacrylamide, derivatives of acrylonitrile and derivatives of methacrylonitrile.

5. Pneumatic object or inflatable article according to Claim 4, in which said polymerized monomer is selected from the group consisting of styrene, methylstyrenes, *para*-(*tert*-butyl)styrene, chlorostyrenes, bromostyrenes, fluorostyrenes and para-hydroxystyrene.

6. Pneumatic object or inflatable article according to Claim 5, in which the thermoplastic polyisobutylene block elastomer is selected from the group consisting of styrene/isobutylene diblock copolymers ("SIBs") and styrene/isobutylene/styrene triblock copolymers ("SIBSs").

7. Pneumatic object or inflatable article according to Claim 6, in which the thermoplastic polyisobutylene block elastomer is a styrene/isobutylene/styrene ("SIBS").

8. Pneumatic object or inflatable article according to Claim 4, in which said polymerized monomer is selected from the group consisting of acenaphthylene, indene, 2-methylindene, 3-methylindene, 4-methylindene, dimethylindenes, 2-phenylindene, 3-phenylindene, 4-phenylindene, isoprene, esters of acrylic acid, crotonic acid, sorbic acid and methacrylic acid, derivatives of acrylamide, derivatives of methacrylamide, derivatives of acrylonitrile and derivatives of methacrylonitrile.

9. Pneumatic object or inflatable article according to any one of the preceding claims, in which the thermoplastic polyisobutylene block elastomer is the sole elastomer of the airtight layer.

10. Pneumatic object according to any one of the preceding claims, in which the airtight elastomer layer additionally comprises an extender oil at a content of less than 150 parts per 100 parts by weight of thermoplastic polyisobutylene block elastomer, in particular less than 100 parts and preferably between 5 and 100 parts.

11. Pneumatic object or inflatable article according to Claim 10, in which the extender oil is polybutene and preferably polyisobutylene.

12. Pneumatic object according to any one of the preceding claims, in which the platy filler of said airtight elastomer layer is in a content of between 2% and 30% by volume, preferably between 3% and 20% by volume.

13. Pneumatic object according to any one of the preceding claims, in which the platy filler of said airtight elastomer layer is selected from the group consisting of graphites, phyllosilicates, and mixtures of such fillers.

14. Pneumatic object or inflatable article according to Claim 16, in which said object is a pneumatic tyre.

15. Pneumatic object or inflatable article according to Claim 16, in which said pneumatic object is an inner tube.

EP 2 844 500 B1

**Fig. 1**

16

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009007064 A
- EP 731112 A
- US 4946899 A
- US 5260383 A
- EP 1431343 A
- EP 1561783 A
- EP 1566405 A
- WO 2005103146 A
- US 20040194863 A
- WO 2006047509 A

**Littérature non-brevet citée dans la description**

- **Z. FODOR ; J.P. KENNEDY.** *Polymer Bulletin,* 1992, vol. 29 (6), 697-705
- **J. E. PUSKAS ; G. KASZAS ; J.P. KENNEDY ; W.G. HAGER.** *Journal of Polymer Science Part A : Polymer Chemistry,* 1992, vol. 30, 41
- **J.P. KENNEDY ; N. MEGURIYA ; B. KESZLER.** *Macromolecules,* 1991, vol. 24 (25), 6572-6577
- **G. KASZAS ; J.E. PUSKAS ; P. KENNEDY.** *Applied Polymer Science,* 1990, vol. 39 (1), 119-144
- **J.E. PUSKAS ; G. KASZAS ; J.P. KENNEDY.** *Macromolecular Science, Chemistry,* 1991, vol. A28, 65-80
- **J.E. PUSKAS ; G. KASZAS ; J.P. KENNEDY ; W.G. HAGER.** *Journal of Polymer Science part A : Polymer Chemistry,* 1992, vol. 30, 41
- **J.P. KENNEDY ; S. MIDHA ; Y. TSUNGAE.** *Macromolecules,* 1993, vol. 26, 429